# EUROPEAN PATENT APPLICATION

(11) **EP 3 457 419 A1**
(43) Date of publication of application: **20.03.2019**
(21) Application number: 16903205.9
(22) Date of filing: 29.07.2016
(51) Int. Cl.: H01G 9/052

(54) **CAPACITOR AND METHOD FOR MANUFACTURING CAPACITOR**

(30) Priority: 24.05.2016 JP 2016103171
(71) Applicant: Tokin Corporation, Sendai-shi, Miyagi 982-8510 (JP); National University Corporation Hokkaido University, Sapporo-shi, Hokkaido 060-0808 (JP)
(72) Inventor: HABAZAKI Hiroki, Sapporo-shi Hokkaido 060-0808 (JP); SAKATA Koji, Sendai-shi Miyagi 982-8510 (JP)
(74) Representative: Prüfer & Partner mbB Patentanwälte · Rechtsanwälte
(86) International application number: PCT/JP2016/072327
(87) International publication number: WO 2017/203726

(57) **Abstract**

A capacitor comprises an anode, an oxide layer, a dielectric layer and a cathode. The oxide layer is located between the anode and the dielectric layer. The anode is made of Zr-alloy having composition of ZrM where M is a metal element which is capable of forming an oxide coating in an electrolytic solution. The oxide layer includes a composite oxide of ZrM having a hexagonal close-packed structure and having composition of (ZrM)O_{Y} where Y < 2. The dielectric layer includes another composite oxide of ZrM having composition of (ZrM)O₂.

## Description

### Technical Field

This invention relates to a capacitor comprising an anode made of zirconium (Zr) alloy.

### Background Art

A valve metal such as aluminum (Al), tantalum (Ta) and niobium (Nb) is used as a material of an anode of an electrolytic capacitor (capacitor). In general, when an anode is formed of such a metal material, the metal material is formed with a dielectric layer made of an anodic oxide coating. For example, each of Non-Patent Document 1 and Patent Document 1 specifically discloses a capacitor comprising such anode.

Non-Patent Document 1 describes, two types of capacitors, namely an aluminum capacitor and a tantalum capacitor, as representative examples of the aforementioned capacitors. Among them, the tantalum capacitor is characterized by small size and high capacity in comparison with the aluminum capacitor. For this reason, the tantalum capacitors are widely used in electronic devices etc,. under the present situation. However, since tantalum is a rare metal, its material price is high. In addition, the production area of the material is limited, so that there is a problem from a viewpoint of stable material supply. Accordingly, there is a requirement for a metal material that replaces tantalum. Patent Document 1 discloses a niobium capacitor comprising an anode made of niobium that is a metal material to replace tantalum.

### Prior Art Documents

### Patent Document(s)

Patent Document 1: JP 2003-342603 A

### Non-Patent Document(s)

Non-Patent Document 1: representative edition by Yoshiharu Matsuda, Tetsuya Osaka and Yuichi Sato, "Capacitor Handbook", Maruzen Co., Ltd., January 30, 2009, p. 43 to 106

### Summary of Invention

### Technical Problem

An anode oxide coating (dielectric layer) of niobium tends to be degraded in properties during use because of crystallization. For this reason, a niobium capacitor is not yet popular. Thus, a capacitor that replaces a tantalum capacitor has not yet been provided.

It is therefore an object of the present invention to provide a new capacitor that replaces a tantalum capacitor.

### Solution to Problem

An aspect of the present invention provides a capacitor comprising an anode, an oxide layer, a dielectric layer and a cathode. The oxide layer is located between the anode and the dielectric layer. The anode is made of Zr-alloy having composition of ZrM where M is a metal element which is capable of forming an oxide coating in an electrolytic solution. The oxide layer includes a composite oxide of ZrM having a hexagonal close-packed structure and having composition of (ZrM)O_{Y} where Y < 2. The dielectric layer includes another composite oxide of ZrM having composition of (ZrM)O₂.

Another aspect of the present invention provides a forming method of a capacitor comprising an anode, an oxide layer, a dielectric layer and a cathode. This forming method comprises a preparing step, a preliminary oxidizing step, a diffusing step, an oxidizing step and a combining step. The preparing step is to prepare a starting material made of Zr-alloy having composition of ZrM where M is a metal element. The preliminary oxidizing step is to form a primary oxide layer on the starting material to form a first intermediate body including an alloy layer made of the Zr-alloy and the primary oxide layer. The diffusing step is to diffuse oxygen contained in the primary oxide layer into the alloy layer via heat-treatment of the first intermediate body to form a second intermediate body including a secondary oxide layer and the anode. The secondary oxide layer is formed of the primary oxide layer and a part of the alloy layer into which oxygen is diffused, and the anode is formed of another part of the alloy layer into which oxygen is not diffused. The oxidizing step is to anodically oxidize a part of the secondary oxide layer by applying voltage to the second intermediate body in an electrolytic solution to form the dielectric layer which is formed of an anodically oxidized part of the secondary oxide layer and the oxide layer which is formed of an anodically unoxidized part of the secondary oxide layer. The combining step is to combine the anode, the oxide layer and the dielectric layer with the cathode.

### Advantageous Effects of Invention

In general, oxygen is easily dissolved in Zr-alloy. Therefore, if an anode oxide coating (dielectric layer) is formed on an anode made of Zr-alloy, the oxygen in the dielectric layer is diffused into the anode, so that the dielectric layer tends to be degraded in properties during use. In contrast, according to the present invention, the oxide layer including a low-order oxide of Zr-alloy is provided between the anode made of Zr-alloy and the dielectric layer including another oxide of Zr-alloy. According to this structure, the oxygen contained in the dielectric layer is prevented from being diffused, so that degradation of the properties of the dielectric layer can be prevented. The capacitor according to the present invention can be used as a new capacitor that replaces a tantalum capacitor.

An appreciation of the objectives of the present invention and a more complete understanding of its structure may be had by studying the following description of the preferred embodiment and by referring to the accompanying drawings.

### Brief Description of Drawings

Fig. 1 is a cross-sectional view schematically showing a capacitor according to an embodiment of the present invention.
Fig. 2 is a view schematically showing a structure of an anode structure including an anode, an oxide layer and a dielectric layer of the capacitor of Fig. 1, wherein a position of a cathode relative to the dielectric layer is illustrated in dashed line.
Fig. 3 is a high resolution-transmission electron microscope (HR-TEM) image of the dielectric layer of Fig. 2.
Fig. 4 is an electron diffraction image of the dielectric layer of Fig. 2.
Fig. 5 is an electron diffraction image of the dielectric layer of Fig. 4 after heat-treatment at 200°C.
Fig. 6 is a view showing forming steps of the capacitor of Fig. 1.
Fig. 7 is a view showing a structure of a starting material, or Zr-alloy material, which is used to form the anode, the oxide layer and the dielectric layer of Fig. 2.
Fig. 8 is a view showing a structure of a first intermediate body which is formed by preliminary oxidizing the Zr-alloy material of Fig. 7.
Fig. 9 is a graph showing the oxygen concentration of the first intermediate body of Fig. 8.
Fig. 10 is a view showing a structure of a second intermediate body which is formed by applying heat-treatment to the first intermediate body of Fig. 8.
Fig. 11 is a graph showing the oxygen concentration of the second intermediate body of Fig. 10.
Fig. 12 is a view showing a structure of the anode structure including the anode, the oxide layer and the dielectric layer, which is formed by anodically oxidizing the second intermediate body of Fig. 10.
Fig. 13 is a graph showing the oxygen concentration of the anode structure of Fig. 12.
Fig. 14 is a graph showing the oxygen concentration of a modification of the first intermediate body of Fig. 8.
Fig. 15 is a graph showing the oxygen concentration of a modification of the second intermediate body of Fig. 10.
Fig. 16 is a view showing a structure of a modification of the anode structure of Fig. 12.
Fig. 17 is a graph showing the oxygen concentration of the anode structure of Fig. 16.

### Description of Embodiments

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

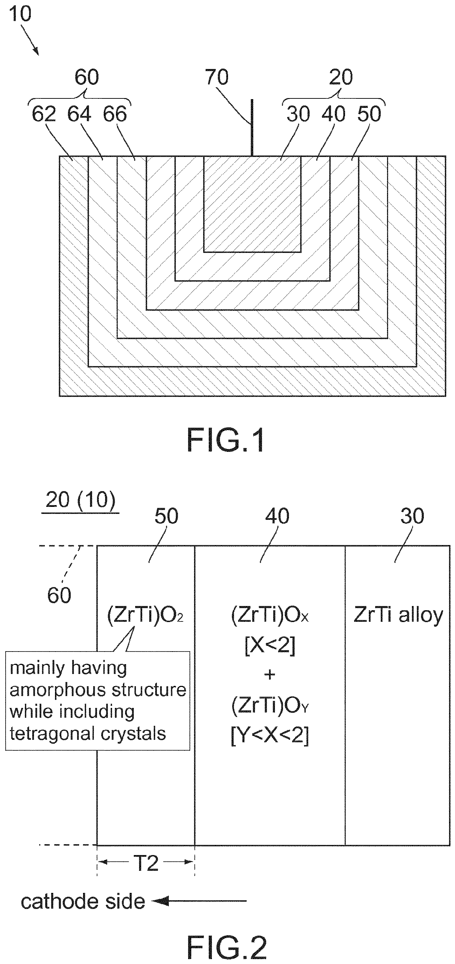

Referring to Fig. 1, a capacitor 10 according to an embodiment of the present invention is a solid electrolytic capacitor comprising an anode structure 20 made of Zr-alloy. The Zr-alloy in the present embodiment is ZrTi binary alloy including zirconium (Zr) as a main component and titanium (Ti) added thereto. However, the present invention is not limited thereto. The Zr-alloy according to the present invention may include Zr and a metal element M which is capable of forming an oxide coating in an electrolytic solution. For example, the metal element M is preferred to be at least one element selected from a group consisting of Ti, aluminum (Al) and silicon (Si).

The capacitor 10 comprises a cathode 60 and a lead wire 70 in addition to the anode structure 20. The anode structure 20 is formed of an anode 30, an oxide layer 40 and a dielectric layer 50, while the cathode 60 is formed of a silver paste layer 62, a carbon layer 64 and a conductive polymer layer 66. Thus, the capacitor 10 comprises the anode 30, the oxide layer 40, the dielectric layer 50, the silver paste layer 62, the carbon layer 64, the conductive polymer layer 66 and the lead wire 70.

In the present embodiment, the cathode 60 is formed over the whole of the side surfaces and the whole of the lower surface of the dielectric layer 50. In detail, the dielectric layer 50 is covered from outside by the conductive polymer layer 66 made of conductive polymer such as polythiophene. Moreover, the conductive polymer layer 66 is covered by the carbon layer 64 from outside, and the carbon layer 64 is covered by the silver paste layer 62 from outside. The lead wire 70 is made of conductor such as zirconium. The lead wire 70 is embedded in the anode 30 and extends along a predetermined direction, or the upper-lower direction in Fig. 1. However, the present invention is not limited thereto. The cathode 60 may have any structure, provided that the cathode 60 works as a cathode of the capacitor 10. Moreover, the lead wire 70 may have any structure, provided that the lead wire 70 works as an anode lead wire of the capacitor 10.

Referring to Figs. 1 and 2, in the anode structure 20, the anode 30 is covered by the oxide layer 40 from outside, and the oxide layer 40 is covered by the dielectric layer 50 from outside. Thus, the oxide layer 40 is located between the anode 30 and the dielectric layer 50. The anode 30 is made of Zr-alloy having composition of ZrM. As previously described, M is a metal element which is capable of forming an oxide coating in an electrolytic solution, and M is Ti in the present embodiment. Moreover, as described later, each of the oxide layer 40 and the dielectric layer 50 is formed by using Zr-alloy (ZrM) as the starting material thereof. Therefore, each of the anode 30, the oxide layer 40 and the dielectric layer 50 includes Zr and the metal element M. In each of the anode 30, the oxide layer 40 and the dielectric layer 50, a content (mass%) of Zr is larger than another content (mass%) of the metal element M.

Hereafter, explanation will be made about a forming method of the capacitor 10 as well as about the structure of the anode structure 20 of the capacitor 10. In the following explanation, the metal element M is Ti, and the Zr-alloy is ZrTi binary alloy. However, the following explanation is also true for Zr-alloy (ZrM) including at least one metal element M. In other words, Ti in the following explanation can be read as the metal element M.

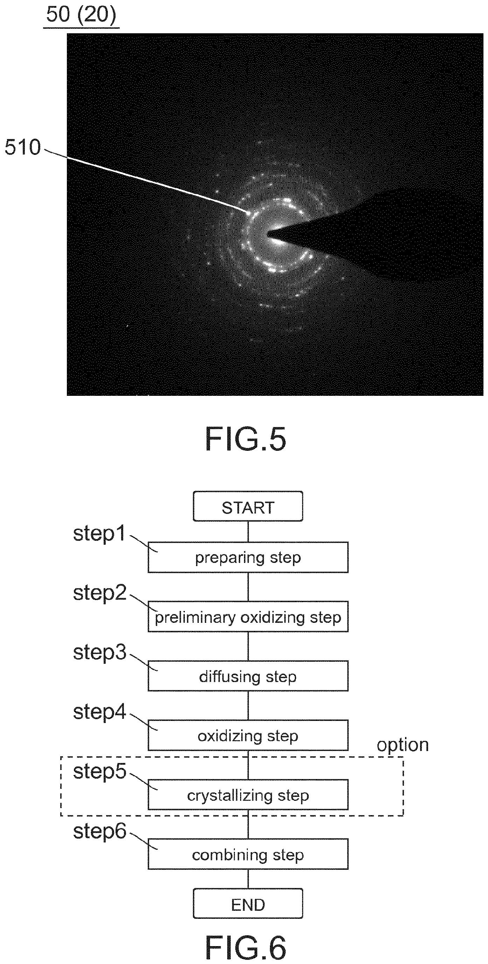

Referring to Fig. 6, the capacitor 10 is formed through a preparing step (step 1), a preliminary oxidizing step (step 2), a diffusing step (step 3), an oxidizing step (step 4) and a combining step (step 6). In other words, a forming method of the capacitor 10 comprises the preparing step, the preliminary oxidizing step, the diffusing step, the oxidizing step and the combining step. However, the present invention is not limited thereto. For example, the forming method of the capacitor 10 may comprise a crystallizing step (step 5) subsequent to the oxidizing step. In other words, the combining step may be performed after the crystallizing step subsequent to the oxidizing step.

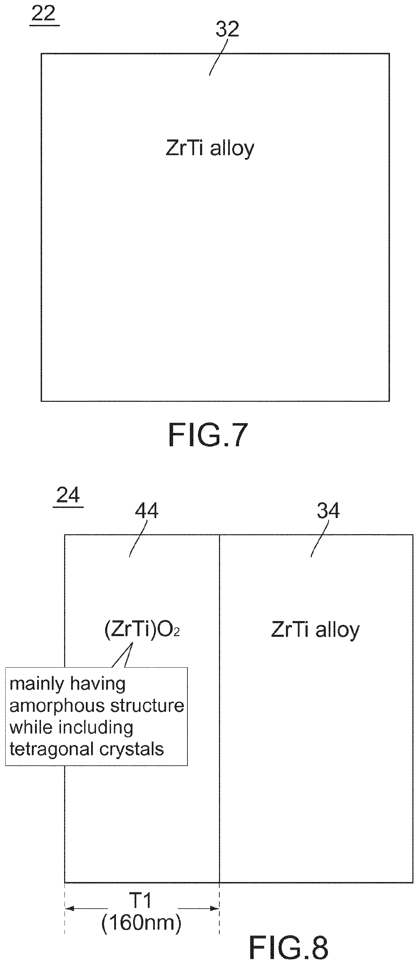

Referring to Figs. 6 and 7, in the preparing step, a starting material 22 made of Zr-alloy having composition of ZrTi is prepared. In the starting material 22, a content (mass%) of Zr is larger than another content (mass%) of Ti. For example, the starting material 22 contains 67 mass% of Zr and 33 mass% of Ti. Moreover, the starting material 22 is formed of a single alloy layer 32 in which Zr and Ti are uniformly distributed. In the starting material 22, ZrTi has a hexagonal close-packed structure. The starting material 22 allows oxygen (O) to be dissolved in lattice of the hexagonal close-packed structure. Such starting material 22 can be made by various commonly known methods such as melting and mixing Zr and Ti.

Referring to Figs. 6 to 8, in the preliminary oxidizing step, a primary oxide layer 44 is formed on the starting material 22, or the alloy layer 32, so that a first intermediate body 24 is formed. The first intermediate body 24 includes an alloy layer 34 and the primary oxide layer 44 which covers the surface of the alloy layer 34.

The alloy layer 34 is made of Zr-alloy (ZrTi). The primary oxide layer 44 is made of a composite oxide of ZrTi. This composite oxide is mainly formed of (ZrTi)O₂ having an amorphous structure. In addition, when the starting material 22 contains Ti of less than 50 mass% as described above, (ZrTi)O₂ having a tetragonal structure is formed. Thus, this composite oxide contains (ZrTi)O₂ having a tetragonal structure.

For example, the preliminary oxidizing step is performed by applying a predetermined voltage to the starting material 22 in an electrolytic solution. For example, the starting material 22 and a counter electrode such as a platinum plate are first immersed into an electrolytic solution such as an ammonium pentaborate solution. Then, the predetermined voltage of 25 to 150 V is applied to the starting material 22 for a predetermined time to anodically oxidize the outer layer of the starting material 22 to form the primary oxide layer 44. According to this forming method, as the predetermined voltage is higher, a thickness (T1) of the primary oxide layer 44 becomes thicker. Moreover, as the predetermined time is longer, the thickness (T1) becomes thicker. As shown in Fig. 8, by adjusting the predetermined voltage and the predetermined time, the primary oxide layer 44 having the thickness (T1) of 160nm, for example, can be obtained.

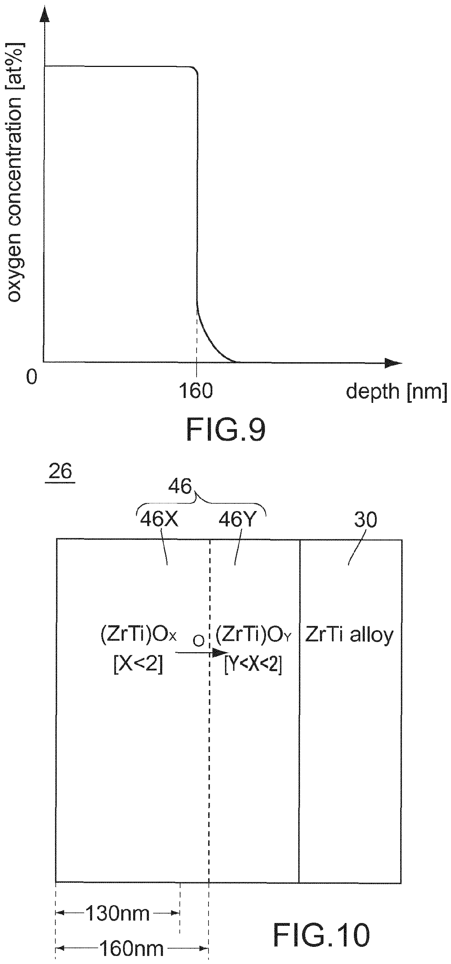

Referring to Figs. 8 and 9, the primary oxide layer 44 formed by the preliminary oxidizing step contains a large amount of oxygen. In contrast, the alloy layer 34 contains almost no oxygen. In detail, the primary oxide layer 44 has an oxygen concentration (at%) that is almost constant regardless of the depth from the surface of the primary oxide layer 44. More specifically, the oxygen concentration of the primary oxide layer 44 can be raised up to the solid solution limit for oxygen, for example, up to 20 at%. In contrast, the alloy layer 34 has another oxygen concentration that is rapidly lowered down to zero depending on the depth.

As described above, the preliminary oxidizing step in the present embodiment is a step of anodically oxidizing the outer layer of the starting material 22. However, the present invention is not limited thereto. The preliminary oxidizing step may be performed by any method, provided that the primary oxide layer 44 and the alloy layer 32 with the aforementioned structure can be obtained.

Referring to Figs. 6, 8 and 10, in the diffusing step, the oxygen contained in the primary oxide layer 44 is diffused into the alloy layer 34 via heat-treatment of the first intermediate body 24, so that a second intermediate body 26 is formed. The second intermediate body 26 includes a secondary oxide layer 46 and the anode 30. The secondary oxide layer 46 is formed of the primary oxide layer 44 of the first intermediate body 24 and a part of the alloy layer 32 of the first intermediate body 24 into which the oxygen is diffused. Therefore, a thickness of the secondary oxide layer 46 is thicker than the thickness (T1) of the primary oxide layer 44.

The anode 30 is formed of another part of the alloy layer 32 into which the oxygen is not diffused. Therefore, the anode 30 consists of Zr-alloy (ZrTi). In contrast, the secondary oxide layer 46 is a composite oxide of ZrTi that contains the oxygen dissolved in ZrTi. In detail, the secondary oxide layer 46 includes a first layer 46X and a second layer 46Y. The first layer 46X is formed so that the oxygen is partially extracted from the primary oxide layer 44 of the first intermediate body 24. The thus-formed first layer 46X is substantially formed of a low-order composite oxide of ZrTi having composition of (ZrTi)O_{X} where X < 2. However, the first layer 46X may include another composite oxide of ZrTi having composition of (ZrTi)O₂. Meanwhile, the second layer 46Y is formed so that the oxygen diffused from the primary oxide layer 44 is dissolved in the lattice of the hexagonal close-packed structure of the alloy layer 32 of the first intermediate body 24. The thus-formed second layer 46Y is formed of a composite oxide of ZrTi which contains a small amount of oxygen in comparison with the first layer 46X and which has composition of (ZrTi)O_{Y} where Y < X < 2. In particular, a part of the second layer 46Y, which is located in the vicinity of the boundary with the anode 30 of ZrTi-alloy, is formed of a composite oxide which has an oxygen concentration extremely close to zero and has composition of (ZrTi)O_{Y} where Y ≈ 0.

The heat-treatment in the diffusing step can be performed in an environment in which no oxygen is contained, for example, in a vacuum or in an inert gas atmosphere, within a temperature range of not less than 500 °C but not more than 1000 °C. For example, the first intermediate body 24 may be heat-treated at 550°C for 1 hour in a vacuum of not more than 1×10⁻³ Pa. The temperature elevation rate of this heat-treatment may be 10°C/min, for example. According to this heat-treatment, as the heat-treatment temperature is higher, the thickness of the secondary oxide layer 46 becomes thicker. In addition, as the heat-treatment time is longer, the thickness of the secondary oxide layer 46 becomes thicker. As shown in Fig. 10, by adjusting the heat-treatment temperature and the heat-treatment time, the secondary oxide layer 46 thicker than 160 nm, for example, can be obtained.

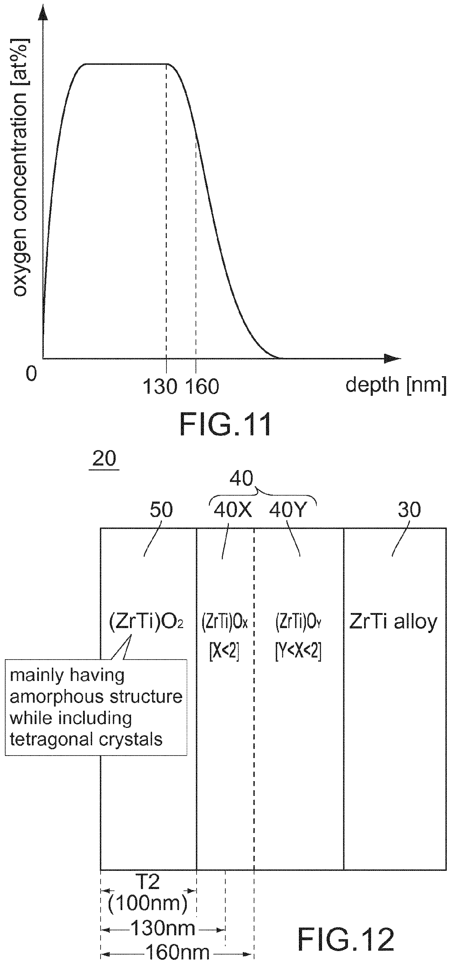

Referring to Figs. 8 to 11, as described above, by the heat-treatment in the diffusing step, the oxygen contained in the composite oxide of ZrTi having composition of (ZrTi)O₂ is diffused toward the inside of the alloy layer 34. Referring to Figs. 10 and 11, as a result, the secondary oxide layer 46 has a non-uniform oxygen concentration. In detail, the oxygen concentration in the vicinity of the surface of the secondary oxide layer 46 becomes almost zero. Moreover, the oxygen concentration of the secondary oxide layer 46 peaks at the solid solution limit for oxygen, for example, and then gradually decreases when the depth exceeds a predetermined depth which is 130 nm in a sample shown in Fig. 11.

Referring to Figs. 6, 10 and 12, in the oxidizing step, a part of the secondary oxide layer 46 is anodically oxidized by a method similar to the anodic oxidation in the preliminary oxidizing step, so that the dielectric layer 50 and the oxide layer 40 are formed. The dielectric layer 50 is formed of an anodically oxidized part of the secondary oxide layer 46, and the oxide layer 40 is formed of an anodically unoxidized part of the secondary oxide layer 46. Therefore, a thickness of the secondary oxide layer 46 is equal to a thickness of the oxide layer 40 added by another thickness (T2) of the dielectric layer 50.

The dielectric layer 50 is formed of a composite oxide of ZrTi. This composite oxide is mainly formed of (ZrTi)O₂ having an amorphous structure while including (ZrTi)O₂ having a tetragonal structure. In contrast, the oxide layer 40 is formed of another composite oxide of ZrTi which contains oxygen dissolved in Zr and Ti similarly to the secondary oxide layer 46. In detail, the oxide layer 40 includes a first layer 40X and a second layer 40Y. The first layer 40X is formed of an anodically unoxidized part of the first layer 46X of the secondary oxide layer 46 of the second intermediate body 26. Therefore, the first layer 40X is formed of the low order composite of ZrTi having composition of (ZrTi)O_{X} where X < 2 similarly to the first layer 46X. Meanwhile, the second layer 40Y is formed of the second layer 46Y of the secondary oxide layer 46 of the second intermediate body 26. Therefore, the second layer 40Y is formed of the composite oxide of ZrTi having composition of (ZrTi)O_{Y} where Y < X < 2 similarly to the second layer 46Y. In particular, a part of the second layer 40Y, which is located in the vicinity of the boundary with the anode 30 of ZrTi-alloy, is formed of the composite oxide which has an oxygen concentration extremely close to zero and has composition of (ZrTi)O_{Y} where Y ≈ 0.

The anodic oxidation in the oxidizing step is performed by applying a predetermined voltage to the second intermediate body 26 in an electrolytic solution. For example, the second intermediate body 26 and a counter electrode such as a platinum plate are first immersed into an electrolytic solution such as an ammonium pentaborate solution. Then, the predetermined voltage of 25 to 150 V is applied to the second intermediate body 26 for a predetermined time to anodically oxidize the outer layer of the secondary oxide layer 46 to form the dielectric layer 50. According to this forming method, as the predetermined voltage is higher, the thickness (T2) of the dielectric layer 50 becomes thicker. Moreover, as the predetermined time is longer, the thickness (T2) becomes thicker. As shown in Fig. 12, by adjusting the predetermined voltage and the predetermined time, for example, by applying a voltage of 50 V for 30 minutes, the dielectric layer 50 having the thickness (T2) of 100 nm, for example, can be obtained.

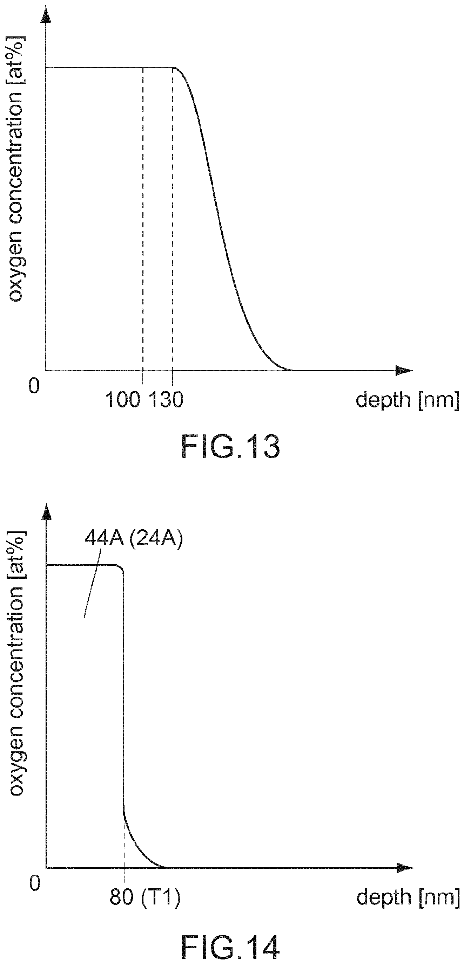

Referring to Figs. 10 to 13, by the anodic oxidation in the oxidizing step, oxygen is dissolved in the outer layer of the secondary oxide layer 46 so that the dielectric layer 50 is formed. Referring to Figs. 12 and 13, the thus-formed dielectric layer 50 contains a large amount of oxygen. In detail, the dielectric layer 50 has an oxygen concentration that is almost constant regardless of the depth from the surface of the dielectric layer 50. More specifically, the oxygen concentration of the dielectric layer 50 can be raised up to the solid solution limit, for example, up to 20 at%. In contrast, the oxide layer 40 has another oxygen concentration that is lowered depending on the depth and becomes almost zero in the vicinity of the boundary with the anode 30.

Referring to Figs. 1 and 6, in the combining step, the anode structure 20 including the anode 30, the oxide layer 40 and the dielectric layer 50 is combined with the cathode 60. More specifically, the cathode 60 is formed to cover the dielectric layer 50. Then, the lead wire 70 is attached. As a result, the capacitor 10 is made.

Referring to Fig. 12, as can be seen from the above explanation, the first layer 40X of the oxide layer 40 includes the low-order composite oxide of ZrM having composition of (ZrM)O_{X} where M is a metal element such as Ti, and X < 2, and the second layer 40Y of the oxide layer 40 includes the composite oxide of ZrM having a hexagonal close-packed structure and having composition of (ZrM)O_{Y} where M is a metal element such as Ti, and Y < X < 2. In particular, in the present embodiment, the oxide layer 40 consists of the low-order composite oxide of ZrTi and the composite oxide of ZrTi having the hexagonal close-packed structure. However, the present invention is not limited thereto. For example, the oxide layer 40 may contain a small amount of another element and an oxide of Zr having another structure, provided that the most part of the oxide layer 40 is the low-order composite oxide of ZrTi and the composite oxide of ZrTi having the hexagonal close-packed structure.

Referring to Fig. 2, as described above, the oxide layer 40 in the anode structure 20 of the capacitor 10 includes the low-order composite oxide of ZrTi having composition of (ZrTi)O_{X} where X < 2 and the composite oxide of ZrTi which has composition of (ZrTi)O_{Y} where Y < X < 2 and which has the hexagonal close-packed structure. In contrast, the dielectric layer 50 includes the composite oxide of ZrTi having composition of (ZrTi)O₂. As can be seen from these compositions, the atomic percentage of oxygen to ZrTi of the composite oxide of ZrTi included in the dielectric layer 50 is larger than that of the composite oxide of ZrTi (including the low-order composite oxide) included in the oxide layer 40.

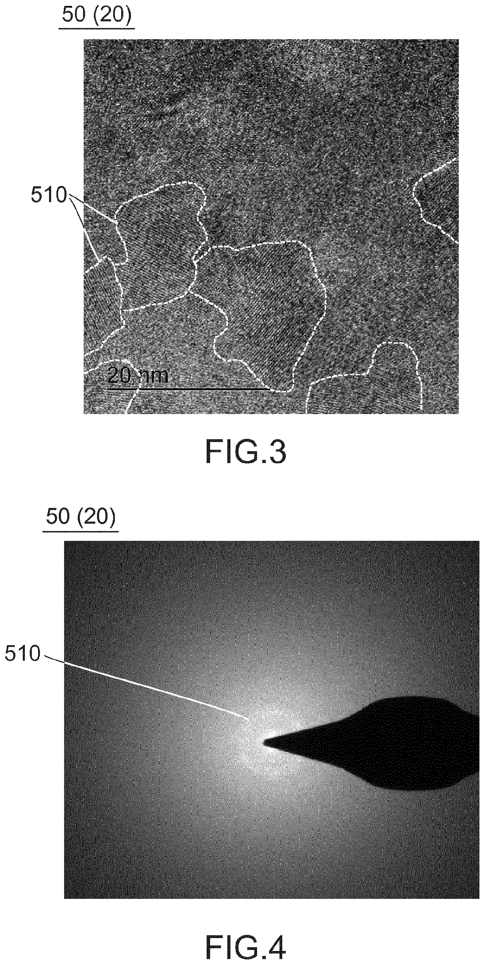

Referring to Figs. 2 and 3, the composite oxide of ZrTi included in the dielectric layer 50 contains crystals which mostly have the tetragonal structures and have no monoclinic structure. In other words, almost all the crystals of the composite oxide of ZrTi included in the dielectric layer 50 are tetragonal crystals 510 that define capacitance of the capacitor 10, and the monoclinic crystals having low relative permittivity are rarely contained or not contained at all. Moreover, the dielectric layer 50 includes the composite oxide of ZrTi having an amorphous structure and having composition of (ZrTi)O₂ in addition to the composite oxide of ZrTi having the tetragonal structure and having composition of (ZrTi)O₂.

In particular, in the present embodiment, the dielectric layer 50 consists of the composite oxide of ZrTi having the tetragonal structure and the composite oxide of ZrTi having the amorphous structure. However, the present invention is not limited thereto. For example, the dielectric layer 50 may contain a small amount of another element and a low-order oxide of Zr having another structure, provided that the most part of the dielectric layer 50 includes the aforementioned composite oxide of ZrTi having the tetragonal structure as its main crystal structure and the aforementioned composite oxide of ZrTi having the amorphous structure.

Referring to Figs. 2, 12 and 13, in general, oxygen is easily dissolved in Zr-alloy. Therefore, if an anodic oxide coating (dielectric layer 50) is directly formed on the surface of the anode 30 made of Zr-alloy, the oxygen in the dielectric layer 50 is diffused into the anode 30, so that the dielectric layer 50 tends to be degraded in properties during use.

In contrast, according to the present embodiment, the oxide layer 40 including the low-order composite oxide of Zr-alloy is provided between the anode 30 made of Zr-alloy and the dielectric layer 50 including the oxide of Zr-alloy. In other words, the oxide layer 40 (middle layer) containing oxygen is formed between the anode 30 and the dielectric layer 50. Moreover, the oxygen concentration in the vicinity of the boundary between the dielectric layer 50 and the oxide layer 40 can be raised up to the solid solution limit. According to this structure, while the capacitor 10 is used, the oxygen in the dielectric layer 50 is hardly diffused into the oxide layer 40. According to the present embodiment, the oxygen contained in the dielectric layer 50 can be prevented from being diffused by a new method of dissolving a sufficient amount of oxygen into the middle layer (oxide layer 40) in advance, so that degradation of the properties of the dielectric layer 50 can be prevented. Thus, the capacitor 10 can be used as a new capacitor which replaces a tantalum capacitor.

Referring to Fig. 2, the dielectric layer 50 formed by the aforementioned oxidizing step (see Fig. 6) includes 25 volume% or more of the composite oxide of ZrTi having the tetragonal structure and composition of (ZrTi)O₂. The capacitor 10 comprising this dielectric layer 50 has a capacitance sufficient for actual use. Moreover, as described below, when the aforementioned crystallizing step (see Fig. 6) is performed subsequent to the oxidizing step, the capacitance of the capacitor 10 can be greatly improved.

Referring to Figs. 6 and 12, as previously described, the dielectric layer 50 formed in the oxidizing step includes the composite oxide of ZrTi having the amorphous structure and the composite oxide of ZrTi having the tetragonal structure. In the crystallizing step, the anode structure 20 is subjected to heat-treatment of 200°C or more under the atmosphere over 24 hours, for example. Since the oxide layer 40 with a sufficient amount of oxygen dissolved therein is provided, the oxygen is not diffused from the dielectric layer 50 in this heat-treatment. Instead, the composite oxide of ZrTi having the tetragonal structure is further formed of the composite oxide of ZrTi having the amorphous structure which is included in the dielectric layer 50. The dielectric layer 50 after the crystallizing step includes 90 volume% or more of the composite oxide of ZrTi having the tetragonal structure.

Figs. 4 and 5 show TEM electron diffraction images of a sliced sample of the dielectric layer 50 through which electron beam penetrates. Each of Figs. 4 and 5 is a TEM diffraction image of the dielectric layer 50 formed by the forming method of the present embodiment. However, the crystallizing step (see Fig. 6) is not applied to the dielectric layer 50 shown in Fig. 4, while the crystallizing step is applied to the dielectric layer 50 shown in Fig. 5. Referring to Figs. 4 and 5, a part of the dielectric layer 50, which is formed of the tetragonal crystals 510 that are oriented crystals, appears as clear white spots (in particular, see Fig. 5), and an amorphous part of the dielectric layer 50 appears vague (in particular, see Fig. 4).

As can be seen from Figs. 4 and 5, when the crystallizing step is performed, the volume ratio of the tetragonal crystals 510 contained in the dielectric layer 50 is raised from about 25% to about 90%, for example. The tetragonal crystals 510 having high permittivity increase in ratio, so that the permittivity of the dielectric layer 50 is improved. Referring to Figs. 1 and 2, from a view point of increase of the capacitance of the capacitor 10, it is preferable to make the thickness (T2) of the dielectric layer 50 thinner while improving the permittivity of the dielectric layer 50 as described above. The thickness (T2) of the dielectric layer 50 of the present embodiment can be made not more than a predetermined thickness, for example, 100nm. As a result, the capacitor 10 having a capacitance more than that of a tantalum capacitor can be obtained.

Referring to Figs. 6, 8, 12 and 13, in the aforementioned embodiment, the thickness (T1) of the primary oxide layer 44 formed in the preliminary oxidizing step is thicker than the thickness (T2) of the dielectric layer 50 formed in the oxidizing step. The thickness (T1) is made large as described above, so that the oxygen concentration in the vicinity of the boundary between the dielectric layer 50 and the oxide layer 40 can be made high when the thickness (T2) is made to be the predetermined thickness, for example, to be 100nm. However, the present invention is not limited thereto. As described below, the thickness (T1) may be thinner than the thickness (T2).

Referring to Figs. 6, 7 and 14, in the preliminary oxidizing step of a modification, a first intermediate body 24A is formed of the starting material 22. The first intermediate body 24A has a structure identical to the first intermediate body 24 (see Fig. 8) except that the first intermediate body 24A includes a primary oxide layer 44A having the thickness (T1) thinner than that of the primary oxide layer 44 (see Fig. 8). The thickness (T1) of an example illustrated in Fig. 14 is 80 nm. For example, the first intermediate body 24A can be formed by adjusting the predetermined voltage in the preliminary oxidizing step. Referring to Figs. 8, 9 and 14, the primary oxide layer 44A contains a large amount of oxygen similarly to the primary oxide layer 44.

Referring to Figs. 6, 14 and 15, in the diffusing step of the modification, a second intermediate body 26A is formed of the first intermediate body 24A. The second intermediate body 26A has a structure identical to the second intermediate body 26 (see Fig. 10) except that the second intermediate body 26A includes a secondary oxide layer 46A having a thickness different from that of the secondary oxide layer 46 (see Fig. 10). For example, the second intermediate body 26A can be formed by adjusting the heat-treatment condition in the diffusing step. Referring to Figs. 10, 11 and 15, the oxygen concentration of the secondary oxide layer 46A is further non-uniform in comparison with the secondary oxide layer 46.

Referring to Figs. 6 and 15 to 17, in the oxidizing step of the modification, an oxide layer 40A and the dielectric layer 50 is formed of the secondary oxide layer 46A. As a result, an anode structure 20A according to the modification is formed. For example, the anode structure 20A can be formed by adjusting the predetermined voltage in the oxidizing step. The anode structure 20A comprises the anode 30, the oxide layer 40A and the dielectric layer 50. The anode 30 and the dielectric layer 50 of the anode structure 20A have structures identical to those of the anode 30 and the dielectric layer 50 of the anode structure 20 (see Fig. 12), respectively. However, the oxide layer 40A does not include the first layer 40X unlike the dielectric layer 50 (see Fig. 12) of the anode structure 20. In other words, the oxide layer 40A includes only the second layer 40Y.

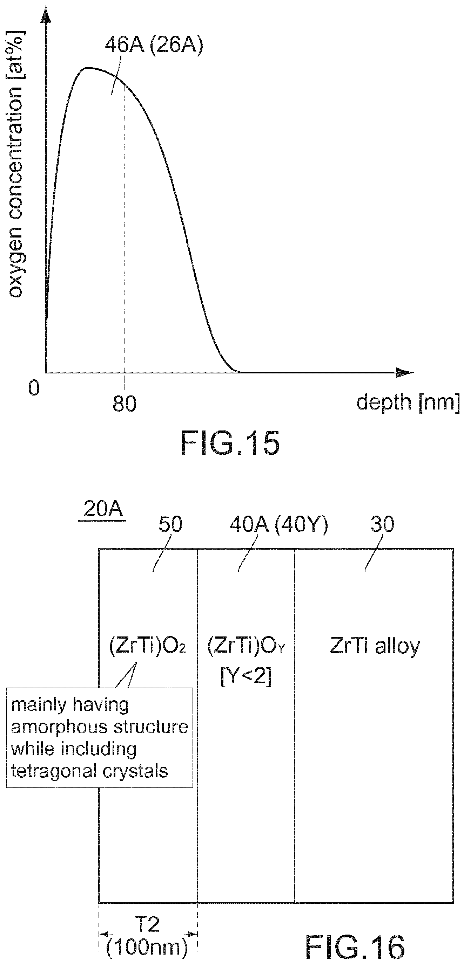

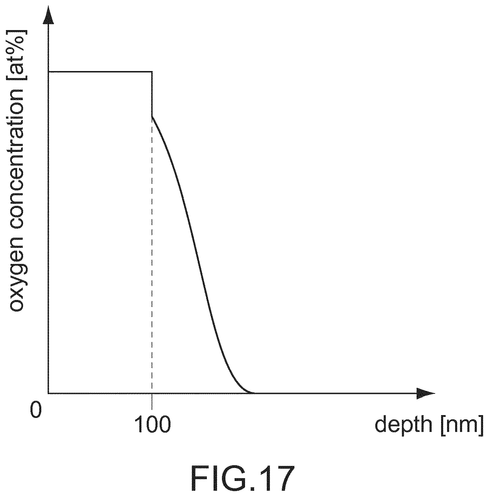

Referring to Figs. 16 and 17, the concentration distribution of the oxygen contained in the oxide layer 40A is different from that of the oxide layer 40 (see Figs. 12 and 13) to some extent. More specifically, the oxygen concentration in the vicinity of the boundary between the dielectric layer 50 and the oxide layer 40A is rapidly lowered from the solid solution limit. However, the anode structure 20A according to the modification has properties similar to those of the anode structure 20 (see Fig. 2) and is hardly degraded in properties during use similarly to the anode structure 20. Moreover, the properties of the anode structure 20A can be improved by performing the additional crystallizing step (see Fig. 6) similarly to the anode structure 20.

The present application is based on a Japanese patent application of JP2016-103171 filed before the Japan Patent Office on May 24, 2016, the content of which is incorporated herein by reference.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

### Reference Signs List

- 10: capacitor
- 20, 20A: anode structure
- 22: starting material
- 24, 24A: first intermediate body
- 26, 26A: second intermediate body
- 30: anode
- 32, 34: alloy layer
- 40, 40A: oxide layer
- 40X: first layer
- 40Y: second layer
- 44, 44A: primary oxide layer
- 46, 46A: secondary oxide layer
- 46X: first layer
- 46Y: second layer
- 50: dielectric layer
- 510: tetragonal crystal
- 60: cathode
- 62: silver paste layer
- 64: carbon layer
- 66: conductive polymer layer
- 70: lead wire

## Claims

1. A capacitor comprising an anode, an oxide layer, a dielectric layer and a cathode, wherein:
the oxide layer is located between the anode and the dielectric layer;
the anode is made of Zr-alloy having composition of ZrM where M is a metal element which is capable of forming an oxide coating in an electrolytic solution;
the oxide layer includes a composite oxide of ZrM having a hexagonal close-packed structure and having composition of (ZrM)O_{Y} where Y < 2; and
the dielectric layer includes another composite oxide of ZrM having composition of (ZrM)O₂.

2. The capacitor as recited in claim 1, wherein the metal element M is at least one element selected from a group consisting of Ti, Al and Si.

3. The capacitor as recited in claim 1 or 2, wherein the composite oxide of ZrM included in the dielectric layer contains crystals mostly having tetragonal structures.

4. The capacitor as recited in one of claims 1 to 3, wherein in each of the anode, the oxide layer and the dielectric layer, a content (mass%) of Zr is larger than another content (mass%) of the metal element M.

5. The capacitor as recited in one of claims 1 to 4, wherein the oxide layer further includes a low-order composite oxide of ZrM having composition of (ZrM)O_{X} where X < 2.

6. A forming method of a capacitor comprising an anode, an oxide layer, a dielectric layer and a cathode, the forming method comprising:
a preparing step of preparing a starting material made of Zr-alloy having composition of ZrM where M is a metal element;
a preliminary oxidizing step of forming a primary oxide layer on the starting material to form a first intermediate body including an alloy layer made of the Zr-alloy and the primary oxide layer;
a diffusing step of diffusing oxygen contained in the primary oxide layer into the alloy layer via heat-treatment of the first intermediate body to form a second intermediate body including a secondary oxide layer and the anode, the secondary oxide layer being formed of the primary oxide layer and a part of the alloy layer into which oxygen is diffused, the anode being formed of another part of the alloy layer into which oxygen is not diffused;
an oxidizing step of anodically oxidizing a part of the secondary oxide layer by applying voltage to the second intermediate body in an electrolytic solution to form the dielectric layer which is formed of an anodically oxidized part of the secondary oxide layer and the oxide layer which is formed of an anodically unoxidized part of the secondary oxide layer; and
a combining step of combining the anode, the oxide layer and the dielectric layer with the cathode.

7. The forming method of a capacitor as recited in claim 6, wherein:
the forming method further comprises a crystallizing step subsequent to the oxidizing step;
the dielectric layer formed in the oxidizing step includes a composite oxide of ZrM having an amorphous structure and another composite oxide of ZrM having a tetragonal structure; and
in the crystallizing step, the composite oxide of ZrM having a tetragonal structure is further formed of the composite oxide of ZrM having an amorphous structure via heat-treatment.

8. The forming method of a capacitor as recited in claim 6 or 7, wherein the preliminary oxidizing step is performed by applying voltage to the starting material in an electrolytic solution.

9. The forming method of a capacitor as recited in one of claims 6 to 8, wherein a thickness of the primary oxide layer formed in the preliminary oxidizing step is thicker than another thickness of the dielectric layer formed in the oxidizing step.

10. The forming method of a capacitor as recited in one of claims 6 to 9, wherein the heat-treatment in the diffusing step is performed in a vacuum or in an inert gas atmosphere within a temperature range of not less than 500 °C but not more than 1000 °C.
